# EUROPÄISCHE PATENTSCHRIFT

(11) **EP 3 235 682 B1**
(45) Veröffentlichungstag und Bekanntmachung des Hinweises auf die Patenterteilung: **18.03.2020**
(21) Anmeldenummer: 17165859.4
(22) Anmeldetag: 11.04.2017
(51) Int. Cl.: B60P 3/42

(54) **MOBILES LADESYSTEM**
MOBILE LOADING SYSTEM
SYSTÈME DE CHARGE MOBILE

(30) Priorität: 20.04.2016 DE 102016206703
(43) Veröffentlichungstag der Anmeldung: 25.10.2017
(73) Patentinhaber: Gröner, Karl, 89555 Söhnstetten (DE)
(72) Erfinder: Gröner, Karl, 89555 Söhnstetten (DE)
(74) Vertreter: Sawodny, Michael-Wolfgang

(56) Entgegenhaltungen:
- WO-A1-02/081339
- JP-A- 2007 045 269
- US-A- 6 027 290
- US-A1- 2009 175 698

## Beschreibung

Die Erfindung betrifft ein mobiles Ladesystem für einen Laderaum insbesondere eines Fahrzeuges, bevorzugt mit einem Fahrzeugrahmen. Der Laderaum weist einen Boden auf. Es besteht generell das Bedürfnis Laderaum, beispielsweise bei Speditionen, besser als bislang auszunutzen. Eine aus dem Stand der Technik bekannte Möglichkeit bestand z.B. darin, in verstärkten Rungen, die in den Boden des Laderaums eingelassen sind, Holme einzuhängen, die dann mit zusätzlichem Ladegut beladen werden konnten. Diese Systeme hatten den Nachteil, dass eine seitliche Be- und Entladung von Ladegut mit Abmessungen über dem Abstand der Rungen, insbesondere von Langmaterial nicht möglich war. Zudem waren die Rungen unflexibel.

Aus der DE 10 2012 011 658 A1 ist eine Ladeguttransportanordnung zum Transportieren von Paletten bekannt geworden, die einen Stützkörper mit mindestens einer Stützfläche zum Halten eines Ladeguts sowie mindestens vier Hilfsflächen (22), die sich von einer Kante wenigstens einer dieser Stützflächen (21) erstreckt, umfasst. Zur Sicherung des Ladeguts (2) sind Stützflächen gezeigt.

Nachteilig an dem System der DE 10 2012 011 658 A1 war, dass die beschriebene Ladeguttransportanordnung kein mobiles Ladesystem darstellte, das auf eine einfache Art und Weise in den Laderaum verbracht werden und aus diesem wieder entnommen werden konnte, je nach Bedarf für die Zuladung. Insbesondere war in der DE 10 2012 011 658 A1 nicht gezeigt, wie eine derartige Ladeguttransporteinrichtung in dem Laderaum fixiert werden konnte.

Die DE 10 2005 026 619 A1 zeigt ein Verbindungselement für Profilstangen, die in Längsrichtung orientierte Aufnahmeschlitze aufweisen. Die DE 10 2005 026 619 A1 betrifft lediglich die Verwendung des Verbindungselementes bei einem modularen Baukastensystem für Kraftfahrzeuge, ein mobiles Ladesystem ist in der DE 10 2005 026 619 A1 nicht gezeigt.

Aus der DE 20 2013 103 256 U1 ist ein Transportkraftfahrzeug für eine Anzahl ähnlich geformter, überwiegend quaderförmiger Verpackungsbehälter in Form eines Kastenwagens bekannt geworden. Auf der Ladefläche des Kastenwagens ist ein regalartiges Lagergestell angeordnet. Eine Mobilität des Gestelles ist in der DE 20 2013 103 256 U1 nicht gezeigt.

Ein weiteres Ladesystem wird in US 602790 A offenbart.

Aufgabe der Erfindung ist es somit, ein mobiles Ladesystem anzugeben, das den Laderaum beispielsweise eines Lastkraftwagens besser als bislang ausnutzt und die Nachteile des Standes der Technik vermeidet.

Erfindungsgemäß wird diese Aufgabe dadurch gelöst, dass ein mobiles Ladesystem für einen Laderaum, insbesondere eines Fahrzeuges, mit einem Boden angegeben wird, das sich dadurch auszeichnet, dass das Ladesystem wenigstens ein Gestell, das einen Ladeboden bevorzugt mit einer Stärke im Bereich 15 - 40 mm, insbesondere 25 - 30 mm trägt, umfasst. Das Gestell kann beispielsweise mittels eines Gabelstaplers in den Laderaum eines Fahrzeuges verbracht werden, falls die Beladung des Laderaumes insbesondere die Stellfläche unter Ausnutzung der gegebenen Laderaumhöhe erhöht werden soll. Das Gestell wird dann auf dem Boden des Laderaumes abgestellt und über Zurrgurte, die zu den bei jedem Ladeboden eines Fahrzeuges vorhandenen Aufnahmen in Form von Zurrpunkten geführt werden, verspannt und gesichert. Die Aufnahmen bzw. Zurrpunkte können auch am Fahrzeugaußenrahmen angeordnet sein. Die Zurrgurte für das mobile Ladesystem zum Verzurren des Gestelles mit dem Ladeboden auf dem Boden des Laderaums greifen auch in Aufnahmen des Gestells ein. Bevorzugt wird das Gestell auf dem Boden des Laderaums mit Zurrgurten, bevorzugt 50 mm breite Polyesterzurrgurten gemäß DIN EN 12 195-2 LC 2.500 daN, die durch die Aufnahmen bzw. die Zurrpunkte von Gestell und Boden des Laderaumes geführt werden, gehalten.

Um zu gewährleisten, dass die Beladung bei formschlüssiger Beladung nicht zur Seite verrutschen kann, können stabil ausgeführte Bordwände oder beidseitige Palettenanschlagleisten nach DIN EN 12 642 6 Code XL eingesetzt werden.

Alternativ kann die seitliche Ladungssicherung durch Antirutschmatten zwischen den Ladeeinheiten und dem Fahrzeugboden durchgeführt werden. Die verwendeten Antirutschmatten müssen mindestens einen Reibwert von µ= 0,6 aufweisen und auf das Ladeeinheitengewicht abgestimmt sein. Die Antirutschmatten können bevorzugt jeweils quer zur Fahrtrichtung unter den Doppelstockverladeboden gelegt werden. Ein derartiges System lässt einen modularen Aufbau eines zusätzlichen Ladebodens zu, insbesondere kann der Laderaum ein oder mehrere nebeneinander und übereinander angeordnete Gestelle mit Ladeboden umfassen. Der modulare Aufbau kann somit sehr flexibel in seinen Abmessungen ausgestaltet werden.

Ein solches mobiles Ladesystem ist nicht an einen spezifischen und vorbereiteten Aufbau oder Laderaum gebunden. Es kann beispielsweise bei Standard-Sattelaufliegern, Anhängern oder Aufbauten unabhängig vom Hersteller eingesetzt werden. Das mobile Ladesystem wird lediglich seitlich mit dem vorhandenen Laderaum verspannt und damit befestigt. Dies hat zum Vorteil, dass vorhandene Zertifizierungen betreffend den genutzten Laderaum erhalten bleiben und nicht durch das mobile Ladesystem berührt werden.

Da das mobile Ladesystem vorhandene Laderäume nutzt, müssen diese zur Aufnahme des Ladesystems auch nicht geändert werden. So bleiben sämtliche Lademöglichkeiten, beispielsweise Heckverteiler und Türen des Laderaumes erhalten. Es sind für die Nutzung keinerlei Um-oder Ausbauten am vorhandenen Laderaum nötig.

In einer bevorzugten Ausgestaltung der Erfindung ist vorgesehen, dass das Gestell des mobilen Ladesystems derart ausgestaltet ist, dass der Ladeboden auf dem Gestell aus allen Richtungen zug- und druckbelastet werden kann. Dadurch ist eine Beladung von allen Seiten möglich und Beschränkungen der Ladeweise fallen weg. Der mit dem mobilen Ladeboden ausgestattete Laderaum kann dann von allen beim vorhandenen und genutzten Aufbau gegebenen Seiten be- und entladen werden. Bevorzugt sind das Gestell und der Ladeboden derart ausgelegt, dass eine maximale Zuladung von 3000 kg symmetrisch und homogen über die Ladefläche verteilt vom Ladeboden des Gestelles aufgenommen werden kann. Besonders bevorzugt beträgt die maximale einstellbare Höhe des Gestelles mit Ladeboden 1800 mm.
Besonders bevorzugt ist es, wenn das Gestell wenigstens vier Füße umfasst, die bevorzugt derart ausgebildet sind, dass sie in ihrer Höhe variabel einstellbar sind. Bevorzugt sind die Füße in der Höhe im Bereich von 0,5 m bis 3,0 m Höhe bevorzugt 1,1 m - 2,2 m Höhe, höhenverstellbar. Durch die Höhenverstellung ist es möglich, den Laderaum maximal in der Höhe auszunutzen.

Besonders bevorzugt ist es, wenn das Gestell in Einzelteile wie Ladeboden und Gestellteile z.B. Füße zerlegt werden kann. Der Zusammenbau des Gestelles erfolgt dann bevor das Gestell mit dem Ladeboden in den Laderaum gebracht wird. Hierzu können zunächst die einzelnen Füße beispielsweise in einer Schiene aufgestellt und fixiert werden. Auf die insgesamt vier Füße kann dann der Ladeboden beispielsweise mittels eines Gabelstaplers aufgesetzt werden. Nach Aufsetzen des Ladebodens auf die vier Füße wird der Ladeboden an den Füßen gesichert, beispielsweise durch Bolzen. Um die Platte abzuheben oder die Höhe der Füße zu verändern werden die Bolzen gelöst. Dieser Aufbau stellt ein zerlegbares mobiles Ladesystem zur Verfügung, das je nach Bedarf zusammen- oder abgebaut werden kann.

Um das Gestell mit einer hohen Standsicherheit zu versehen ist vorgesehen, dass die Füße in eine Schiene, bevorzugt eine U-förmige Schiene eingreifen, die als Auflage, auf dem Boden des Laderaums dient. Durch die U-förmige Schiene wird die Last des Gestells flächig auf den Boden des Laderaumes verteilt.

In einer weitergebildeten Ausführungsform der Erfindung ist vorgesehen, dass der Ladeboden bevorzugt Siebdruckplatten umfasst. Die Siebdruckplatten mit einer Stärke von 15 mm - 40 mm, insbesondere 25 mm - 30 mm sind ausreichend stark ausgebildet, um auch mit hohen Gewichten beladen zu werden. Der Ladeboden ist so ausgelegt, dass Flächengewichte von mindestens 500 kg/m², bevorzugt im Bereich 500 kg/m² bis 5000 kg/m², insbesondere 500 kg/m² bis 2000 kg/m² abgetragen werden können. Wenn ein Gestell mit einem derartigen Ladeboden aus Siebdruckplatten auf den Boden des Laderaums abgesenkt ist, ist es möglich, diesen Ladeboden auch mit Gabelstaplern, Elektroameisen oder ähnlichen schweren Hilfsmitteln und Maschinen zum Be- und Entladen zu befahren.

Eine ausreichende Tragfähigkeit des Gestells für die auf dem Gestell angeordneten Siebdruckplatten wird dadurch sichergestellt, dass das Gestell neben einer Umfassung auch Längs- und Querstreben zur Versteifung des Gestells umfasst. Durch ein derart aufgebautes Gestell können Querlasten oder Drucklasten oder Zuglasten von wenigstens 1 Tonne in alle Richtungen abgetragen werden. Das Gestell umfasst bei einer Breite von beispielsweise 2,44 m und einer Länge von beispielsweise 3,4 m - 4,0 m insgesamt zwei in die Umfassung des Gestelles eingebrachte Querstreben und zwei in die Umfassung des Gestelles eingebrachte Längsstreben. Die angegebenen Abmessungen sind beispielhaft und nicht einschränkend. Die Längs- und/oder Querstreben sowie die Umfassung sind aus einem gelaserten und gekanteten Blech hergestellt. Die Stärke des gelaserten und gekanteten Bleches beträgt bevorzugt zwischen 3 mm - 8 mm bevorzugt zwischen 4 mm - 6 mm insbesondere 5 mm. Mit einem Blechmaterial mit einer Stärke im Bereich von 5 mm aus einem Stahl, insbesondere einem Edelstahl, bevorzugt V2A1.4301 Edelstahl wird ein sehr leichtes, aber dennoch ausreichend starkes Gestell zur Aufnahme von Lasten von wenigstens 4 Tonnen Traglast und wenigstens 1 Tonne seitliche Belastung zur Verfügung gestellt. Das sehr leichte Gestell mit dem sehr leichten Boden, hat ein sehr geringes Gewicht, weswegen durch Einbringen des mobilen Laderaums die Beladungskapazität nicht stark reduziert wird.

Es ist somit möglich, mit dem mobilen Ladeboden die Nutzungskapazität des vorhandenen Laderaumes sehr stark zu erhöhen.

Um bei mehreren Böden auf einem LKW diese sichern zu können, umfasst das Gestell eine Hakensicherung, die mit einem Bolzen arretiert wird.
Neben dem mobilen Ladesystem stellt die Erfindung auch ein Fahrzeug mit einem derartigen mobilen Ladesystem zur Verfügung. Hierbei umfasst das Fahrzeug einen Laderaum, wobei in den Boden des Laderaums und/oder des Fahrzeugrahmens Aufnahmen, beispielsweise Zurrpunkte eingelassen sind, in die wenigstens zwei, bevorzugt vier Zurrgurte eingreifen können und mit denen das in den Laderaum eingebrachte Gestell verspannt werden kann. Hierzu umfasst auch das Gestell Aufnahmen, in die die Verzurrgurte eingebracht werden können. Selbstverständlich kann der Laderaum auch mehr als ein Gestell aufnehmen, beispielsweise zwei hintereinander liegende Gestelle. Die hintereinander liegenden Gestelle können getrennt voneinander angeordnet sein wie beschrieben oder verbunden, so dass sie eine mechanische Einheit ausbilden. Verwendung findet das mobile Ladesystem als mobiler Doppelstockboden im Laderaum eines Fahrzeuges.

Nachfolgend soll die Erfindung ohne Beschränkung hierauf an einem Ausführungsbeispiel beschrieben werden.

Es zeigen:
- Fig. 1: Ein erfindungsgemäßes Gestell zur Aufnahme eines Ladebodens
- Fig. 2: Zwei neben einander angeordnete Gestelle, darstellend den modularen Aufbau des mobilen Ladesystems
- Fig. 3: ein Sattelauflieger mit mobilem Ladesystem

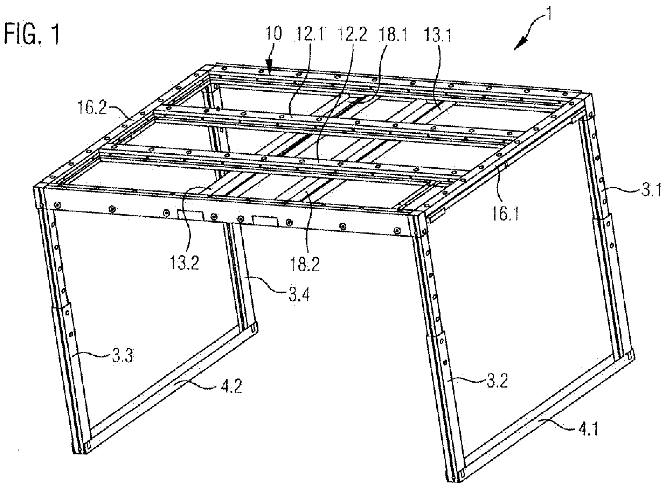

In Figur 1 ist das Gestell eines erfindungsgemäßen mobilen Ladesystems, auf dem der nichtdargestellte Ladeboden aufbracht wird, gezeigt.

Das Gestell 1 umfasst insgesamt in der dargestellten Ausführungsform 4 verstellbare Füße 3.1, 3.2, 3.3, 3.4. Die verstellbaren Füße 3.1, 3.2 sowie 3.3, 3.4 sind in eine U-förmige Schiene 4.1 beziehungsweise 4.2 eingelassen. Die U-förmige Schiene 4.1, 4.2 dient der Auflage, auf den Boden des Laderaums auf das das mobile Ladesystem aufgebracht wird. Durch die U-förmige ausgestaltete Schiene 4.1, 4.2 wird die Last, die vom Gestell über die Füße in die Schiene eingeleitet wird, flächig über den Boden des Laderaums, auf dem das mobile Ladesystem aufgebracht wird, verteilt. Die Füße münden in eine Umfassung 10, die mit Längsstreben 12.1, 12.2 und Querstreben 13.1, 13.2 verstärkt werden kann. Die Umfassung besitzt zwei Seitenteile 16.1, 16.2 sowie zwei Längsteile 18.1, 18.2.

Auf die Umfassung 10 und die Längsstreben 12.1, 12.2 wird der Ladeboden (nicht dargestellt) aufgebracht, beispielsweise durch Aufsetzen mit einem Gabelstapler. Der Plattenboden wird dann auf dem Gestell z.B. mit Bolzen gesichert. Das Gestell ist in seine Einzelteile zerlegbar. Dadurch das Gestell und Ladeboden separate Bauteile sind, ist das System sehr flexibel. Die Umfassung 10 und die Längs- 12.1, 12.2, bzw. Querstreben 13.1, 13.2 tragen den Ladeboden und leiten die über den Ladeboden eingeleiteten Kräfte über die Füße 3.1, 3.2, 3.3, 3.4 auf den Boden des Laderaums auf dem das Gestell 1 des mobilen Ladesystems aufgesetzt wird. Die Elemente der Umfassung 10 sowie die Quer- und Längsstreben umfassen bevorzugt ein Blechmaterial mit einer Stärke von 5 mm, bevorzugt handelt es sich hierbei um gelaserte und gekantete Bleche, wobei die Bleche beispielsweise zu der Umfassung verschweißt werden.

Der Boden, bevorzugt der aus Holz, insbesondere aus Siebdruckplatten bestehende Boden, ist mit Nieten oder Schrauben auf dem Gestell befestigt.

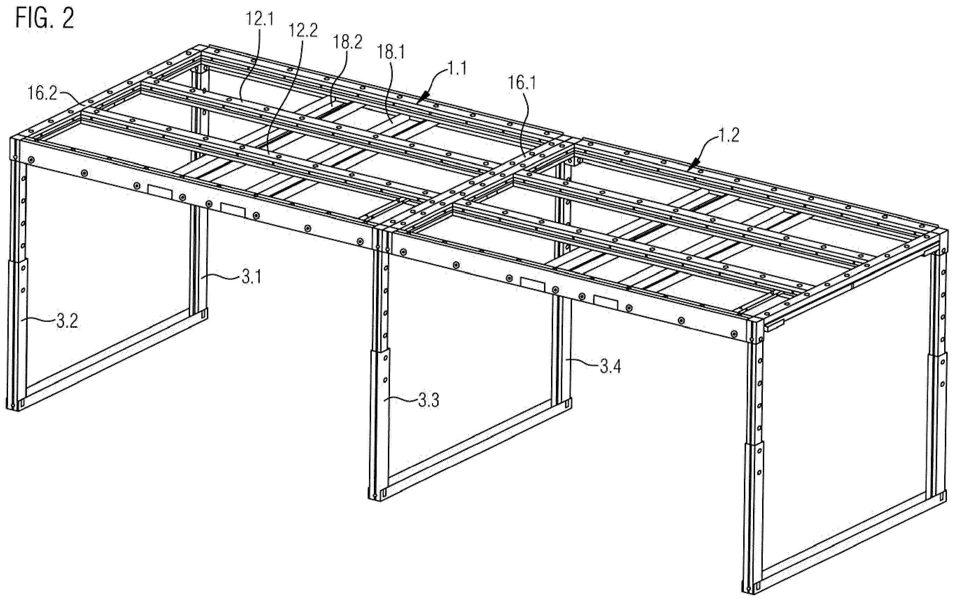

In Figur 2 sind zwei hintereinander angeordnete Gestelle 1.1, 1.2, die denselben Aufbau wie in Figur 1 haben, gezeigt. Für gleiche Bauteile wird daher die gleiche Bezugsziffer wie in Fig. 1 verwendet. Wie aus Fig. 2 hervorgeht, zeichnet sich das erfindungsgemäße mobile System dadurch aus, dass es einen modularen Aufbau hat. Die Länge eines Gestelles beträgt, beispielsweise 3,0 m - 6,0 m, bevorzugt 3,40 m - 4,0 m während die Breite an die Normbreite von Laderäumen im Bereich 2,30 m - 2,70 m, bevorzugt 2,44 m angepasst ist. Wie Figur 2 zu entnehmen, lässt der modulare Aufbau zu, dass der Boden eines Laderaumes nur teilweise mit einem weiteren Boden, den der Ladeboden auf dem Gestell ausbildet, versehen ist. Auch eine vollständige Auslastung des Bodens ist möglich. Der Laderaum selbst nutzt die gesetzlich limitierte Laderaumbreite. Bei der Ausgestaltung gemäß Figur 2 mit zwei Gestellen 1.1, 1.2 sind die zwei Gestelle mit einem Mittelfuß abgestützt. Möglich wären aber auch Füße, die jedem Gestell zugeordnet sind. Zwei zusammengeschobene Gestelle haben dann einen doppelten mittigen Fuß. Vorteil eines Systems mit Füßen an jedem Gestell der zusammengesetzten Einheit ist die Modularität des Systems, da beliebige Längen des Ladebodens durch einfaches Zusammenstellen von Gestellen zur Verfügung gestellt werden können.

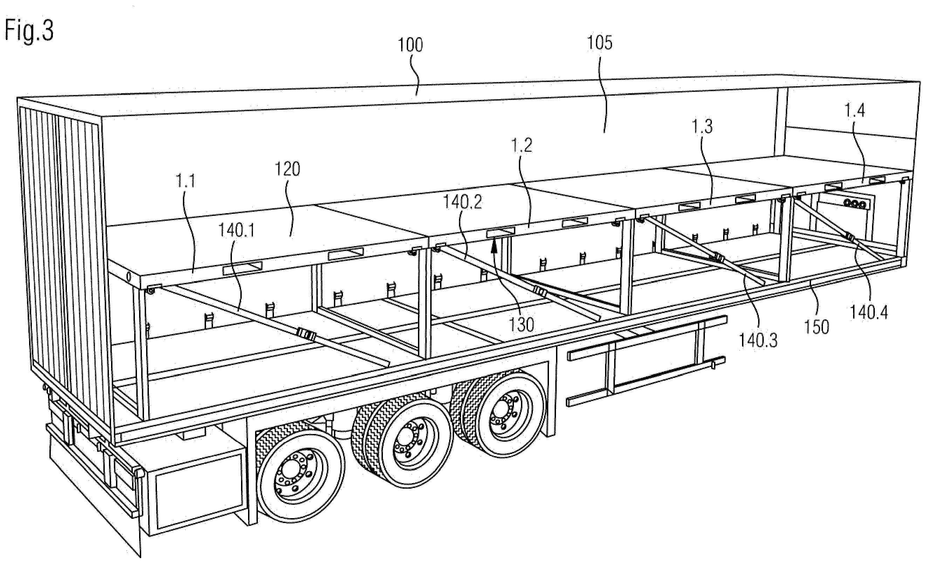

In Figur 3 ist ein Sattelauflieger 100 mit Laderaum 105 mit einem Boden 130 gezeigt, der ein mobiles Ladesystem 120 aufnimmt. Das mobile Ladesystem 120 besteht vorliegend aus vier nebeneinander angeordneten Gestellen 1.1, 1.2, 1.3, 1.4, die jeweils einen Ladeboden 130 aufnehmen. Bei dem Ladeboden 130 handelt es sich bevorzugt um ein Siebdruckplattenboden, bevorzugt aus Holz. Die einzelnen Gestelle 1.1, 1.2, 1.3, 1.4 des mobilen Ladesystems 120 werden im Sattelaufleger 100 mit Spanneinrichtungen 140.1, 140.2, 140.3, 140.4 verzurrt. Bei den Spanneinrichtungen 140.1, 140.2, 140.3 140.4 handelt es sich um Spanngurte, bevorzugt Polyesterspanngurte, bevorzugt mit einer Breite von 50 mm. Das Verspannen der einzelnen Gestelle 140.1, 140.2, 140.3, 140.4 erfolgt dadurch, dass die Spanngurte in im Boden des Laderaums vorhandene Aufnahmen, insbesondere Zurrpunkte eingreifen. Auch das Gestell umfasst Aufnahmen für die Spanngurte. Die Zurrpunkte im Boden des Laderaumes des Fahrzeuges sind bevorzugt Zurrpunkte gemäß DIN EN 12 640. Bevorzugt wird das Gestell mit wenigstens je zwei Spanngurten, wie gezeigt, bevorzugt mit je vier Spanngurten (nicht dargestellt) verzurrt. Die vier nebeneinander angeordneten Gestelle bilden einen durchgehenden Ladeboden 130 aus. Wie aus Figur 3 hervorgeht, kann der Laderaum 105 durch das mobile Ladesystem 120 mit einem zusätzlichen Ladeboden 130 ausgestaltet werden, der von allen vier Seiten her beladbar ist, insbesondere von vorne, von hinten und von der Seite. Aus Figur 3 geht auch hervor, dass der Ladeboden sich wie dargestellt über die gesamte Länge des Sattelauflegers 100 erstrecken kann. Möglich wäre aber auch nur teilweise die Länge des Sattelauflegers auszunutzen. Da die Höhe der Füße der Gestelle eingestellt werden kann, kann der zusätzliche Ladeboden ebenfalls in der Höhe eingestellt werden. Auch die Einstellung unterschiedlicher Höhen von einzelnen Gestellen ist möglich. Jedes Gestell 1.1, 1.2, 1.3, 1.4 ist auf dem Boden 150 des Sattelauflegers 100 abgestellt und wird vom Boden 150 des Sattelauflegers 100 abgestützt. Besonders gut zu erkennen ist in Fig. 3 der modulare Aufbau des erfindungsgemäßen mobilen Transportsystems.

Der modulare Aufbau des mobilen Ladesystems sorgt für eine größtmögliche Flexibilität bei der Beladung eines Fahrzeuges. Auch ermöglicht er es, das System an unterschiedliche Längen des Laderaumes einfach anzupassen. Ein weiterer Vorteil des Systems ist, dass es die Kräfte auf einen vorhandenen Ladeboden einleitet. Durch einfaches Verzurren, insbesondere Verspannen auf der vorhandenen Ladefläche kann ein Gestell des mobilen Ladesystems fest verankert werden. Zusätzliche Rungen zur Fixierung, wie in Systemen nach dem Stand der Technik sind nicht nötig. Durch den autarken Aufbau des Systems, wird die volle Be- und Entladung über die Länge des Laderaumes zur Verfügung gestellt. Des Weiteren sind in der oberen Etage auch von der Seite lange Teile ladbar. Des Weiteren wird das Leergewicht eines Anhänger, Aufliegers oder Fahrzeuges, das das mobile Ladesystem aufnimmt, kaum erhöht. Das mobile Ladesystem ist aus einem Laderaum herausnehmbar, so dass bei herausgenommenem mobilen Ladesystem und Nichtbenutzung desselben, die volle Zuladung des Fahrzeuges erhalten bleibt. Ein weiterer Vorteil gegenüber den bekannten Lösungen ist, dass die verbesserte Ausnutzung des Laderaumes nicht mit einem Mehr an Leergeweicht einhergeht. Hierdurch können Emissionen verringert werden.

## Patentansprüche

1. Mobiles Ladesystem für einen Laderaum eines Fahrzeuges
mit einem Boden, und einem Fahrzeugrahmen,
wobei
das mobile Ladesystem wenigstens ein Gestell (1), das einen Ladeboden trägt und
das Gestell wenigstens zwei erste Aufnahmen für Verspanneinrichtungen umfasst
und
der Boden des Laderaumes und/oder der Fahrzeugrahmen wenigstens zwei Aufnahmen, für Verspanneinrichtung aufweist,
**dadurch gekennzeichnet, dass**
das Gestell (1) eine Umfassung (10) mit Querstreben (13.1, 13.2) und Längsstreben (12.1,12.2) aufweist und die Umfassung (10), die Längs-(12.1, 12.2) und/oder Querstreben (13.1, 13.2) gelaserte und/oder gekantete Bleche sind.

2. Mobiles Ladesystem nach Anspruch 1,
**dadurch gekennzeichnet, dass**
der Ladeboden eine Stärke im Bereich 5 - 40 mm aufweist.

3. Mobiles Ladesystem nach einem der Ansprüche 1 bis 2,
**dadurch gekennzeichnet, dass**
die gelaserten und/oder gekanteten Bleche eine Stärke im Bereich 3mm - 8mm aufweisen.

4. Mobiles Ladesystem nach einem der Ansprüche 1 bis 3,
**dadurch gekennzeichnet, dass**
der Ladeboden Anschlagleisten und/oder Antirutschmatten, bevorzugt mit einem Reibwert von mindestens µ = 0,6 umfasst.

5. Mobiles Ladesystem nach einem der Ansprüche 1 bis 4,
**dadurch gekennzeichnet, dass**
der Ladeboden auf dem Gestell (1) derart ausgestaltet ist, dass er aus allen Richtungen zug- und druckbelastet werden kann.

6. Mobiles Ladesystem nach einem der Ansprüche 1 bis 5,
**dadurch gekennzeichnet, dass**
das Gestell (1) wenigstens vier Füße (3.1, 3.2, 3.3, 3.4), insbesondere in der Höhe verstellbare Füße, umfasst.

7. Mobiles Ladesystem nach einem der Ansprüche 1 bis 6,
**dadurch gekennzeichnet, dass**
die in der Höhe verstellbaren Füße im Bereich 0,5m bis3,0m verstellbare Füße umfasst.

8. Mobiles Ladesystem nach Anspruch 1,
**dadurch gekennzeichnet, dass**
das Gestell (1) eine Schiene (4.1,4.2) umfasst, in die die Füße (3.1,3.2,3.3,3.4) eingreifen.

9. Mobiles Ladesystem nach einem der Ansprüche 1 bis 4,
**dadurch gekennzeichnet, dass**
der Ladeboden bevorzugt Siebdruckplatten, bevorzugt aus Holz umfasst und/oder befahrbar ausgestaltet ist.

10. Mobiles Ladesystem nach einem der Ansprüche 1 bis 9,
**dadurch gekennzeichnet, dass**
der Ladeboden und das Gestell separate Bauteile sind, die miteinander verbunden und/oder voneinander gelöst werden können.

11. Mobiles Ladesystem nach einem der Ansprüche 1 bis 10,
**dadurch gekennzeichnet, dass**
das Gestell Hakensicherungen umfasst.

12. Fahrzeug insbesondere mit einem Fahrzeugrahmen mit einem Laderaum, der einen Boden umfasst, wobei der Bodes des Laderaumes und/oder der Fahrzeugrahmen wenigstens zwei, bevorzugt vier Aufnahmen, insbesondere Zurrpunkte zur Aufnahme von Verspanneinrichtungen, insbesondere Zurrguten umfasst,
**dadurch gekennzeichnet, dass**
der Laderaum des Fahrzeuges wenigstens ein mobiles Ladesystem gemäß einem der Ansprüche 1 bis 11 aufnimmt das mit Verspanneinrichtungen in den Aufnahmen des Bodens des Laderaumes verzurrt sind.

13. Fahrzeug gemäß Anspruch 12,
**dadurch gekennzeichnet, dass**
der Laderaum des Fahrzeuges mehrere nebeneinander und/oder übereinander angeordnet mobile Ladesysteme gemäß einem der Ansprüche 1 bis 11 umfasst.

14. Verwendung eines mobilen Ladesystems gemäß einem der Ansprüche 1 bis 11,
als mobiler Doppelstockboden in einem Laderaum eines Fahrzeuges.

## Claims

1. Mobile loading system for a loading space of a vehicle having a floor and a vehicle frame, wherein
the mobile loading system comprises at least one frame (1) which supports a loading floor and
the frame comprises at least two first receptacles for bracing devices
and
the floor of the loading space and/or the vehicle frame has at least two receptacles for bracing devices,
**characterized in that**
the frame (1) has an enclosure (10) with transverse struts (13.1, 13.2) and longitudinal struts (12.1, 12.2) and the enclosure (10), the longitudinal struts (12.1, 12.2) and/or transverse struts (13.1, 13.2) are laser-cut and/or folded metal sheets.

2. Mobile loading system according to claim 1, **characterized in that** the loading floor has a thickness in the range 5-40 mm.

3. Mobile loading system according to one of claims 1 to 2, **characterized in that** the laser-cut and/or folded metal sheets have a thickness in the range 3 mm-8 mm.

4. Mobile loading system according to one of claims 1 to 3, **characterized in that** the loading floor comprises stop bars and/or anti-slip mats, preferably with a coefficient of friction of at least µ=0.6.

5. Mobile loading system according to one of claims 1 to 4, **characterized in that** the loading floor on the frame (1) is designed in such a way that it can be subjected to tensile and compressive loads from all directions.

6. Mobile loading system according to one of claims 1 to 5, **characterized in that** the frame (1) comprises at least four feet (3.1, 3.2, 3.3, 3.4), in particular feet adjustable in height.

7. Mobile loading system according to one of claims 1 to 6, **characterized in that** the feet adjustable in height comprise feet adjustable in the range of 0.5 m to 3.0 m.

8. Mobile loading system according to claim 1, **characterized in that** the frame (1) comprises a rail (4.1, 4.2) in which the feet (3.1, 3.2, 3.3, 3.4) engage.

9. Mobile loading system according to one of claims 1 to 4, **characterized in that** the loading floor preferably comprises screen printing plates, preferably made of wood, and/or is designed so that it can be driven over.

10. Mobile loading system according to one of claims 1 to 9, **characterized in that** the loading floor and the frame are separate components which can be connected to and/or disconnected from one another.

11. Mobile loading system according to one of claims 1 to 10, **characterized in that** the frame comprises hook securing devices.

12. Vehicle, in particular having a vehicle frame with a loading space comprising a floor, wherein the floor of the loading space and/or the vehicle frame comprises at least two, preferably four, receptacles, in particular lashing points for receiving bracing devices, in particular lashing straps, **characterized in that** the loading space of the vehicle receives at least one mobile loading system according to one of claims 1 to 11, which is lashed with bracing devices in the receptacles of the floor of the loading space.

13. Vehicle according to claim 12, **characterized in that** the loading space of the vehicle comprises a plurality of mobile loading systems according to one of claims 1 to 11 arranged next to and/or above one another.

14. Use of a mobile loading system according to one of claims 1 to 11, as a mobile double-decker floor in a loading space of a vehicle.

## Revendications

1. Système de chargement mobile pour un espace de chargement d'un véhicule comportant un plancher et un châssis de véhicule,
dans lequel le système de chargement mobile comprend au moins un bâti (1) qui porte un plancher de chargement et le bâti comprend au moins deux premiers logements pour des dispositifs de serrage et le plancher de l'espace de chargement et/ou le châssis de véhicule présentent au moins deux logements pour des dispositifs de serrage,
**caractérisé en ce que**
le bâti (1) présente un entourage (10) avec des entretoises transversales (13.1, 13.2) et des entretoises longitudinales (12.1, 12.2), et l'entourage (10), les entretoises longitudinales (12.1, 12.2) et/ou les entretoises transversales (13.1, 13.2) sont des tôles découpées au laser et/ou pliées.

2. Système de chargement mobile selon la revendication 1,
**caractérisé en ce que**
le plancher de chargement présente une épaisseur dans la plage de 5 à 40 mm.

3. Système de chargement mobile selon l'une des revendications 1 à 2,
**caractérisé en ce que**
les tôles découpées au laser et/ou pliées ont une épaisseur dans la plage de 3 mm à 8 mm.

4. Système de chargement mobile selon l'une des revendications 1 à 3,
**caractérisé en ce que**
le plancher de chargement comprend des barres de butée et/ou des tapis antidérapants, de préférence avec un coefficient de frottement d'au moins µ = 0,6.

5. Système de chargement mobile selon l'une des revendications 1 à 4,
**caractérisé en ce que**
le plancher de chargement sur le bâti (1) est conçu de sorte à pouvoir être soumis à des charges de traction et de compression depuis toutes les directions.

6. Système de chargement mobile selon l'une des revendications 1 à 5,
**caractérisé en ce que**
le bâti (1) comprend au moins quatre pieds (3.1, 3.2, 3.3, 3.4), en particulier des pieds réglables en hauteur.

7. Système de chargement mobile selon l'une des revendications 1 à 6,
**caractérisé en ce que**
les pieds réglables en hauteur comprennent des pieds réglables dans la plage de 0,5 m à 3,0 m.

8. Système de chargement mobile selon la revendication 1,
**caractérisé en ce que**
le bâti (1) comprend un rail (4.1, 4.2) dans lequel s'engagent les pieds (3.1, 3.2, 3.3, 3.4).

9. Système de chargement mobile selon l'une des revendications 1 à 4,
**caractérisé en ce que**
le plancher de chargement comprend de préférence des plaques antidérapantes, de préférence en bois, et/ou est conçu de manière à être praticable par un véhicule.

10. Système de chargement mobile selon l'une des revendications 1 à 9,
**caractérisé en ce que**
le plancher de chargement et le bâti sont des éléments séparés qui peuvent être reliés l'un à l'autre et/ou détachés l'un de l'autre.

11. Système de chargement mobile selon l'une quelconque des revendications 1 à 10,
**caractérisé en ce que**
le bâti comprend des dispositifs de fixation à crochet.

12. Véhicule, en particulier avec un châssis de véhicule présentant un espace de chargement qui comprend un plancher, le plancher de l'espace de chargement et/ou le châssis de véhicule comprenant au moins deux, de préférence quatre logements, en particulier points d'arrimage pour recevoir des dispositifs de serrage, en particulier des sangles d'arrimage,
**caractérisé en ce que**
l'espace de chargement du véhicule reçoit au moins un système de chargement mobile selon l'une des revendications 1 à 11, qui est arrimé avec des dispositifs de serrage dans les logements du plancher de l'espace de chargement.

13. Véhicule selon la revendication 12,
**caractérisé en ce que**
l'espace de chargement du véhicule comprend plusieurs systèmes de chargement mobiles selon l'une des revendications 1 à 11 disposés les uns à côté des autres et/ou les uns au-dessus des autres.

14. Utilisation d'un système de chargement mobile selon l'une des revendications 1 à 11,
comme plancher mobile à deux étages dans un espace de chargement d'un véhicule.
